# EUROPÄISCHE PATENTANMELDUNG

(11) **EP 1 435 528 A2**
(43) Veröffentlichungstag der Anmeldung: **07.07.2004**
(21) Anmeldenummer: 03023640.0
(22) Anmeldetag: 17.10.2003
(51) Int. Cl.: G01V 3/10

(54) **Verfahren zur Bodenkompensation**

(30) Priorität: 30.12.2002 DE 10261390; 20.01.2003 DE 10301951
(71) Anmelder: FIRMA ING. KLAUS EBINGER, D-51149 Köln (DE)
(72) Erfinder: Buscher, Andre, 51149 Köln (DE); Ebinger, Klaus Joachim, 51143 Köln (DE)
(74) Vertreter: Heim, Hans-Karl, Dipl.-Ing.

(57) **Zusammenfassung**

Die Erfindung betrifft ein Verfahren zur Bodenkompensation eines im PI-Modus betriebenen Metalldetektors. Die primärund sekundärseitigen Spulensysteme erfahren dabei durch ihre räumliche Achsenanordnung eine lose Wechselwirkungs-Entkopplung.

Es wird hierbei ein Nullpunktsbereich der Wechselwirkungs-Entkopplung eingestellt und anschließend im Nullpunktsbereich eine Verkoppelungsänderung der Spulensysteme zur Eliminierung störender Bodeneffekte durchgeführt.

## Beschreibung

Die Erfindung betrifft ein Verfahren zur Bodenkompensation von Metalldetektoren gemäß Oberbegriff des Anspruches 1.

Verfahren dieser Art sind beispielsweise aus der DE 197 30 952.6 bekannt.
Diese im PI-Modus eingesetzten Verfahren zur Kompensation von bodenmagnetischen Störeffekten machen sich die Abtastung der Sekundärsignale zu Nutze, um über deren Auswertung eine Bodenkompensation durchzuführen.
Ein anderes Verfahren zur Kompensation störender Effekte des magnetischen Untergrundes ist aus der EP 0 816 870 A2 bekannt.
Diese vorausgehend genannten Verfahren können zwar die Bodeneffekte bei gewissen Anwendungsbereichen hinreichend zufriedenstellend kompensieren. Eine Vereinfachung der Auswertung und Verbesserung der Kompensation ist jedoch wünschenswert.

Weitere Verfahren, die zwar nicht eine Bodenkompensation betreffen, aber eine Entkopplung der Wechselwirkung der primär- und sekundärseitigen Spulensysteme aufzeigen, und beispielsweise aus der DE 43 39 419 C2 oder der GB 2153077 A bekannt.

Die dort aufgezeigten Verfahren und Spulensysteme zielen primär darauf ab, mit Überlappungsbereichen zwischen primärseitiger Sendespule und sekundärseitiger Empfangsspule eine Entkopplung der zwischen diesen Spulensystemen bestehenden Wechselwirkung zu erreichen. Eine Bodenkompensation ist bei diesen Systemen nicht in Betracht gezogen.

Der Erfindung liegt daher die **Aufgabe** zugrunde ein gattungsgemäßes Verfahren, insbesondere für den PI-Modus, so zu verbessern, dass die Kompensation von Bodenstöreffekten auf elektronischer oder mechanischer Weise effizient so durchgeführt wird, dass weitgehend eine vollkommene Bodenkompensation erreichbar ist.

Diese Aufgabe wird erfindungsgemäß durch die Merkmale des kennzeichnenden Teils des Anspruches 1 gelöst.

Ein wesentlicher Kerngedanke der Erfindung kann darin gesehen werden, bei Metalldetektoren mit Spulensystemen, deren Achsen nicht ineinanderfallen bzw. die beabstandet sind oder in einem Winkel, zum Beispiel orthogonal, zueinanderstehen, zunächst eine Entkopplung der Wechselwirkung der Spulensysteme bis in den Bereich eines Nullpunkts durchzuführen und anschließend feinfühlig eine Verkopplungsänderung bzw. Verkopplungsadaption der galvanisch getrennten primärseitigen und sekundärseitigen Spulensysteme durchzuführen. Auf diese Weise können die störenden Bodeneffekte weitestgehend vollständig eliminiert werden.

Die Kompensation von störenden Bodeneffekten ist bei Metalldetektoren und insbesondere Minensuchgeräten von immer größerer Bedeutung, da die Einsatzgebiete und damit die Untergrundbedingungen sich gravierend ändern können, so dass Störeffekte ein vermeintliches Metallobjekt vorgeben können bzw. zur Nichtdetektion speziell von kleinen Metallgegenständen führen können.

Erste Ergebnisse mit der Erfindung haben gezeigt, dass die weitgehend vollständige Bodenkompensation auf diese Weise gerade bei Spulensystemen erreicht wird, bei denen die Achsen der primär- und sekundärseitigen Spulen voneinander beabstandet sind, also insbesondere bei überlappenden Spulensystemen.
Ausgenommen hiervon sind Spulensysteme, bei denen z.B. das empfangene Spulensystem vollständig von dem sendeseitigen Spulensystem umschlossen ist.
Das primär- und sekundärseitige Spulensystem besteht im einfachsten Fall aus jeweils einer Spule, die gegenseitig einen Überlappungsbereich aufweisen und beabstandete Spulenachsen in geometrischer und elektromagnetischer Hinsicht haben.
Die Erfindung kann jedoch auch weitere Variationsmöglichkeiten mit Spulen von zwei, drei oder auch vier Spulen haben.

Auch ist davon auszugehen, dass diese erfindungsgemäße Bodenkompensation nicht nur im PI-Modus mit unipolaren Pulsen, sondern auch bei bipolaren Pulsen, erreicht werden kann.
Denkbar ist auch der Einsatz bei anderen aktiven Systemen, die mit anderen Sendesignalen arbeiten.

Auch hat sich gezeigt, dass die vollständige Bodenkompensation nicht nur mechanisch erreicht werden kann, indem z.B. über den Schnittpunkten der entsprechenden Spulensysteme bzw. Spulen, ein Ferritkern, ein Stück Metall oder eine Kurzschlusswindung rotiert.
Bei dieser Art von mechanischer Kompensation ist es auch denkbar, dass die Kompensation bei Metalldetektoren zur Sondierung in Bohrlöchern, z.B. entsprechend der EP 96 119 649.0 dadurch realisiert wird, dass Ferritkerne mit entsprechend großem Abstand vorgesehen werden, um die Bodeneinflüsse zu eliminieren.

Die elektronische Bodenkompensation lässt sich vorteilhafterweise dadurch erreichen, indem im PI-Modus die Änderung der Pulsbreite oder die Änderung der Pulsfrequenz durchgeführt wird, um die Verkopplungsänderung der Spulensysteme zu erreichen.

Das erfindungsgemäße Verfahren zielt daher darauf ab, dass je nach Entkopplungsgrad eines galvanisch getrennten Spulensystems eines Metalldetektors, die weitestgehend vollständige Entkopplung der bodenmagnetischen Effekte im Bereich des Nullpunktes der Kopplung zwischen Primärseite und Sekundärseite des Metalldetektors möglich ist. Man nimmt daher im Bereich des Nullpunktes, der den Entkopplungspunkt für die Entkopplung der Wechselwirkung der Spulensysteme der Primär- oder Sekundärseite betrifft, eine geringfügige Verkopplung der Spulensysteme in Kauf. Ausgehend von diesem Nullpunkt führt man dann eine feinfühlige, abschließende Entkopplung der Spulensysteme durch.

Die kompensierende Wirkung und Verkopplungsänderung der primär- und sekundärseitigen Spulensysteme wird auf folgende Effekte zurückgeführt.
Die sender- und empfängerseitigen Spulensysteme, die geometrisch entkoppelt werden, können zunächst mit einem Innenund Außenfeld des Senders betrachtet werden, das auf das empfängerseitige Spulensystem wirkt. Das Innen- und Außenfeld ist in der Phase um 180° verschoben bzw. das empfangene Pulssignal wechselt seine Richtung von Plus nach Minus. Ist das im Empfängerspulensystem wirkende Innenund Außenfeld im induzierten Betrag entgegengesetzt gleich, so tritt sekundärseitig eine Kompensation bzw. ein Spannungsminimum im Empfängerspulensystem auf.

Wird ein derartig kompensiertes Spulensystem bei magnetisch störendem Untergrund und Böden eingesetzt, so erhält man empfängerseitig in aller Regel immer einen Reststörpegel, der z.B. die Ortung von kritischen Minen verhindern würden.

Zur vollständigen Bodenkompensation führt man daher eine Verkopplung der primär- und sekundärseitigen Spulensysteme dahingehend durch, dass empfängerseitig eine entgegengesetzt gleiche Kompensationswirkung, insbesondere Kompensationsspannung, wirksam werden muss, die den Reststörpegel des Bodens eliminiert.
Die Verkopplung zwischen den primärseitigen und sekundärseitigen Spulensystemen und Vorgängen wird daher feinfühlig so verändert, dass die vom Boden resultierenden bodenmagnetischen Störeffekte nach Betrag und Phase bzw. nach Polaritätsrichtung kompensiert werden.

Beispielsweise kann bei der Verkopplungsänderung bzw. der Verkopplungsadaptation zur Eliminierung der Bodeneffekte anhand eines Zwei-D-Spulensystems, bei dem beide D-Spulen geometrisch entkoppelt werden, also teilweise überlappen, Folgendes beobachtet werden.
Schiebt man eine der D-Spulen über den Nullpunkt, so ergibt sich beim PI-Verfahren eine Polaritätsänderung für die empfangenen Pulse. Die Pulse wechseln daher von Plus nach Minus. Der Entkopplungspunkt bzw. der Punkt der Verkopplungsänderung ist daher der Bereich, wo der Inhalt beider Pulse nahezu symmetrisch ist.
Bei Sinussystemen würde man empfängerseitig einen Phasensprung um 180° festellen.

Obwohl man um den Nullpunkt herum bereits eine relativ große, bodenmagnetische Entkopplung erreicht, ist eine vollständige bodenmagnetische Entkopplung dann möglich, wenn man mit einer feinfühligen Verkopplungsänderung in die eine oder andere Polaritätsrichtung, den Metalldetektor vollständig bodenkompensiert.

Das erfindungsgemäße Verfahren kann daher mit beliebig entkoppelten Spulen- bzw. Schleifensystemen realisiert werden. Z.B. mittels der Entkopplung bei Zwei-D-Spulensystemen oder der orthogonalen Entkopplung. Auch Kompensationsschaltungen mit mehreren Spulen sind möglich.

Bei der mechanischen Justierung bzw. Entkopplung der Spulensysteme ist insbesondere das Verschieben der Spulen im Überlappungsbereich umsetzbar. Eine quasi mechanische Verkopplungseinstellung kann durch das Justieren eines Metallteils, vorzugsweise einer Kurzschlusswindung, über dem bzw. über den Schnittpunkt(en) der Spulen durch Verschieben oder Verdrehen erreicht werden.

Eine elektrisch-elektronische Bodenkompensation und Verkopplungsänderung bzw. Adaptation kann durch eine Kompensationsschaltung erreicht werden, bei der ein Teilbetrag des Sendesignales gegenphasig in die Empfängerspule eingekoppelt wird.
Die Feinvariation und Verkopplungsadaptation kann auch durch die Veränderung von Pulsbreite der verwendeten Pulse und/oder der Wiederholfrequenz im PI-Modus erreicht werden. Auch können Kompensationsschleifen und/oder Kompensationswicklungen Verwendung finden, wobei die Amplitude in der jeweiligen Wicklung z.B. über einen Widerstand gesteuert werden kann.

Die Erfindung macht sich daher eine Art Vorkompensationseffekt in PI-Spulensystemen mit Primär- und Sekundärwicklung zu Nutze, um davon ausgehend durch die weitere Verkopplungsänderung eine weitestgehende vollständige Bodenkompensation zu erreichen.

Es wird dabei berücksichtigt, dass die Verkopplungsänderung nur bei Spulensystemen in bodenkompensierender Wirkung umsetzbar ist, wenn die Räumlichkeit der Spulensysteme zunächst zu einer relativ losen Entkopplung führt, wobei die Achsen dieser Systeme räumlich genügend weit auseinander liegen und nicht das sekundärseitige System vom primärseitigen Sendesystem vollständig umschlossen wird.

Die Erfindung lässt sich daher bevorzugt mit Spulensystemen realisieren, die eine orthogonale bzw. räumliche Entkopplung aufweisen, wo z.B. die geometrische Entkopplung wie bei dem Double-D-System vorliegt, oder die Achsen in einem Winkel von 90° zueinander stehen.

Die Erfindung wird nachfolgend anhand eines schematischen Blockschaltbildes und dem Beispiel entkoppelter Spulensysteme noch erläutert.

Es zeigen:
- Fig. 1: eine schematische Darstellung entkoppelter Rundspulen eines Metalldetektors;
- Fig. 2: eine schematische Darstellung entkoppelter Spulen eines Double-D-Spulensystems;
- Fig. 3: eine schematische Darstellung eines orthogonalen Spulensystems;
- Fig. 4: ein Blockschaltbild eines grundsätzlichen Aufbaus der elektronischen Schaltung eines erfindungsgemäßen Metalldetektors und des dort realisierten Verfahrens.

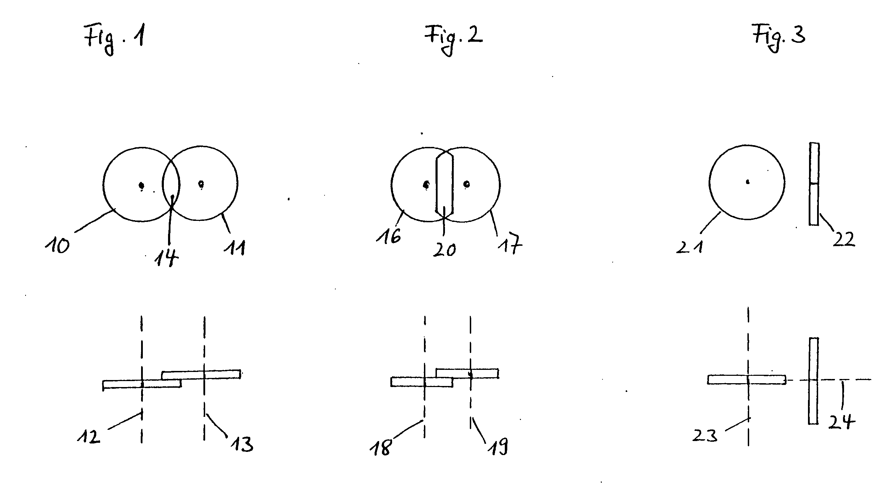

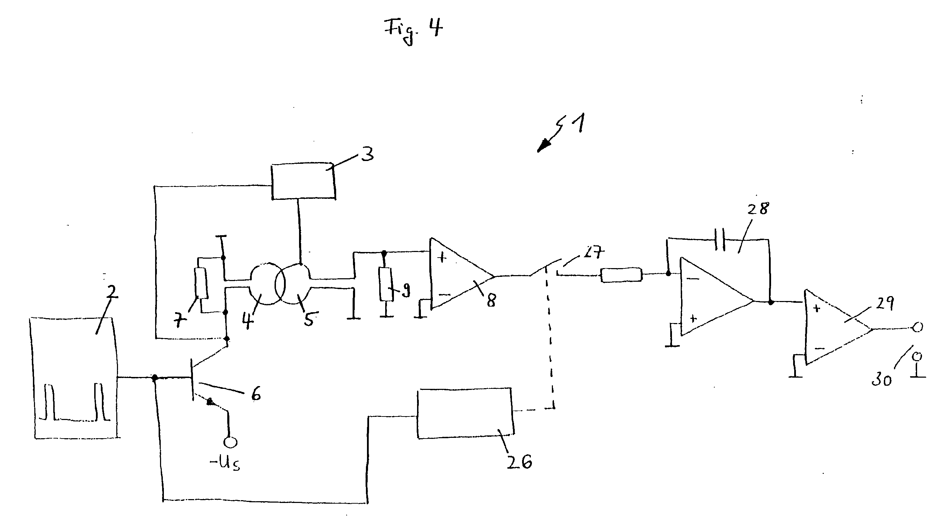

Fig. 1 zeigt in schematischer Darstellung zwei Ringspulen 10, 11, die partiell überlappen und in diesem Bereich eine Überlappungszone 14 bilden. Die Achsen 12, 13 dieser Ringspulen 10, 11 sind relativ weit voneinander beabstandet. Es wird hierbei ein relativ kleiner Überlappungsbereich 14 gebildet.

Obwohl die schematische Darstellung die Anordnung der Ringspulen 10, 11 in verschiedenen horizontalen Ebenen andeutet, kann dies auch in coplanarer Anordnung realisiert werden.

Fig. 2 zeigt schematisch die Anordnung zweier D-Spulensysteme 16, 17 mit einem Überlappungsbereich 20. Die Achsen 18, 19 der D-Spulen 16, 17 sind relativ weit voneinander beabstandet.

Fig. 3 zeigt die schematische Anordnung eines orthogonal angeordneten Spulensystems mit zwei z.B. verschwenkbaren Ringspulen 21, 22. Die Achsen 23, 24 der beiden Spulen stehen daher im Wesentlichen senkrecht zueinander.
Es sind auch hiervon abweichende Winkelanordnungen möglich.

Fig. 4 zeigt in schematischer Darstellung ein Blockschaltbild einer elektronischen Schaltung 1 für einen nach dem erfindungsgemäßen Verfahren arbeitenden Metalldetektor.
Ein Sendegenerator 2 erzeugt die entsprecheden Pulse für das Verfahren im PI-Modus. Diese Pulse werden auf die Basis eines Pulstransistors 6, der emitterseitig auf dem Potenzial -U_{S} liegt, gegeben. Kollektorseitig wird das Signal auf eine Sendespule 4 geführt. Die Sendespule 4 überlappt partiell mit der Empfangsspule 5.
Parallel zur Sendespule 4 ist ein Bedämpfungswiderstand 7 zwischen Kollektor und Bezugspotenzial geschaltet. Weiterhin liegt eine elektronische Kompensationsschaltung 3 einerseits am Kollektor des Pulstransistors 6 und andererseits an der Empfangsspule 5.

Die elektronische Kompensationsschaltung 3 ist hier nicht weiter ausgeführt, da sie in verschiedenster Weise wie vorausgehend kurz umrissen, realisierbar ist.
Das sekundärseitig in der Empfangsspule 5 aufgenommene Signal wird auf den Plus-Eingang eines AC-Verstärkers 8 geführt, der eine Vorbedämpfung mit einem Widerstand 9 aufweist.
Das Ausgangssignal des AC-Verstärkers 8 wird über ein Sampling-Gate 10, einem Integrator 28 zugeführt.

Das Sampling-Gate 10 wird über eine Zeitablaufsteuerung 26 geschaltet, wobei diese Zeitablaufsteuerung andererseits durch den Sendergenerator 2 entsprechend angesteuert wird.

Der Ausgang des Integrators 28 liegt gemäß Blockschaltbild auf dem Plus-Eingang eines DC-Verstärkers 29, an dessen Ausgang 30 ein akustisch oder optisch umgesetztes Detektionssignal im Falle eines georteten Metallobjektes ausgegeben wird.

Gemäß Blockschaltbild nach Fig. 4 ist daher die Kompensation der Bodeneffekte in elektronischer Weise im Rahmen der Kompensationsschaltung 3 realisiert, wodurch verfahrensmäßig die Verkoppelungsadaption zu einer weitgehend vollständigen Eliminierung störender Bodeneffekte umgesetzt werden kann.

## Patentansprüche

1. Verfahren zur Bodenkompensation von im PI-Modus betriebenen Metalldetektoren zur Ortung von Metallobjekten im Boden,
mit primär- und sekundärseitigen Spulensystemen,
wobei mittels der räumlichen Achsenanordnung der Spulensysteme eine lose Wechselwirkungs-Entkopplung der Spulensysteme herbeigeführt wird,
**dadurch gekennzeichnet,**
**dass** die Wechselwirkungs-Entkopplung auf einen Nullpunkt-Bereich eingestellt wird, und
**dass** im Nullpunkt-Bereich eine elektrische und/oder mechanische Verkopplungsänderung zur weitgehend vollständigen Bodenkompensation durchgeführt wird.

2. Verfahren nach Anspruch 1,
**dadurch gekennzeichnet,**
**dass** überlappende oder orthogonale oder im Winkel zueinander angeordnete Spulensysteme verwendet werden.

3. Verfahren nach Anspruch 1 oder 2,
**dadurch gekennzeichnet,**
**dass** Spulensysteme mit ein oder mehreren Spulen verwendet werden.

4. Verfahren nach einem der Ansprüche 1 bis 3,
**dadurch gekennzeichnet,**
**dass** unipolare oder bipolare Pulse verwendet werden.

5. Verfahren nach einem der Ansprüche 1 bis 4,
**dadurch gekennzeichnet,**
**dass** in den Schnittpunkten überlappender Spulensysteme eine Kompensations-Einrichtung, insbesondere ein Ferritkern oder ein Metallstück rotierend, platziert wird.

6. Verfahren nach einem der Ansprüche 1 bis 4,
**dadurch gekennzeichnet,**
**dass** zur Verkopplungsänderung der Spulensysteme eine Änderung der Pulsbreite oder der Pulsfrequenz der Pulse im PI-Modus durchgeführt wird.
